## Europäisches Patentamt
## European Patent Office
## Office européen des brevets

(19)

(11) Publication number: **0 018 201**
**B1**

(12)

# EUROPEAN PATENT SPECIFICATION

(45) Date of publication of patent specification: **20.04.83**

(51) Int. Cl.³: **C 10 G 35/09, B 01 J 23/89**

(21) Application number: **80301220.2**

(22) Date of filing: **14.04.80**

(54) Catalyst for reforming hydrocarbons, method of making the catalyst, and hydrocarbon reforming process using the catalyst.

(30) Priority: **13.04.79 US 29675**
**29.06.79 US 53374**

(43) Date of publication of application:
**29.10.80 Bulletin 80/22**

(45) Publication of the grant of the patent:
**20.04.83 Bulletin 83/16**

(84) Designated Contracting States:
**DE FR GB IT NL**

(56) References cited:
**FR - A - 2 091 114**
**FR - A - 2 380 336**
**GB - A - 2 004 764**
**US - A - 3 801 498**
**US - A - 3 901 827**
**US - A - 4 149 962**

**The file contains technical information submitted after the application was filed and not included in this specification**

(73) Proprietor: **Exxon Research and Engineering Company**
**P.O.Box 390 180 Park Avenue**
**Florham Park New Jersey 07932 (US)**

(72) Inventor: **Mauldin, Charles Harrison**
**620 Marilyn Drive**
**Baton Rouge Louisiana (US)**
Inventor: **Baird, William Chalmers Jr.**
**5905 Bennington Avenue**
**Baton Rouge Louisiana (US)**

(74) Representative: **Somers, Harold Arnold et al,**
**ESSO Engineering (Europe) Ltd. Patents & Licences Apex Tower High Street**
**New Malden Surrey KT3 4DJ (GB)**

Courier Press, Leamington Spa, England.

Catalyst for reforming hydrocarbons, method of making the catalyst, and hydrocarbon reforming
process using the catalyst

Catalytic reforming, or hydroforming, is a process well known to the petroleum refining industry for improving the octane quality of naphthas and straight run gasolines. In a typical process, a series of reactors are provided with fixed beds of catalyst which receive upflow or downflow feed, and each reactor is provided with a heater, or interstage heater, because the reactions which take place are endothermic. A naphtha feed, with hydrogen, or recycle gas, is cocurrently passed sequentially through a reheat furnace and then to the next reactor of the series. The vapor effluent from the last reactor of the series is a gas rich in hydrogen, which usually contains small amounts of normally gaseous hydrocarbons, from which hydrogen is separated from the $C_5^+$ liquid product and recycled to the process to minimize coke production; coke invariably forming and depositing on the catalyst during the reaction.

Reforming catalysts are recognised as dual functional, the catalyst composite including a metal, or metals, or a compound or compounds thereof, providing a hydrogenation-dehydrogenation function and an acidic component providing an isomerization function. The platinum group metals (ruthenium, osmium, rhodium, iridium, palladium and platinum), particularly platinum, have been widely used in commercial reforming operations, these metals being composited with an inorganic oxide base, particularly alumina; and in recent years promoters such as iridium, rhenium, germanium, tin, etc., have been added, particularly to platinum, to enhance one or more of certain of the characteristics which a good reforming catalyst must possess—viz., activity, selectivity, activity maintenance and yield stability. Rhenium has been found particularly useful in providing excellent $C_5^+$ liquid yields and stability. Halogen, e.g., chlorine, is generally added to provide the required acid function. GB—A— 2004764 describes and claims a hydrocarbon reforming catalyst comprising a platinum group component, a rhenium component (obtained by pyrolyzing rhenium carbonyl) and a porous carrier material, the catalyst preferably comprising a halogen component.

The principal reactions produced in reforming are dehydrogenation of naphthenes to produce the corresponding aromatic hydrocarbons; isomerization of n-paraffins to form branched-chain paraffins and isomerization of ring compounds, and dehydrogenation of the latter to form aromatics, dehydrocyclization of paraffins to form aromatics; and hydrocracking of high molecular weight feed constituents to form lower molecular weight, or lower boiling, constituents, the net effect of these reactions being to increase the concentration of aromatics and isomers, with consequent octane improvement of naphthas boiling within the gasoline range. Hydrogenolysis, however, a specific and severe form of hydrocracking which produces methane, can also occur; and hydrogenolysis is particularly acute in reforming with platinum-rhenium catalysts, particularly fresh or regenerated, reactivated platinum-rhenium catalysts, which are particularly hypersensitive.

During hydrogenolysis, exotherms or heat fronts are produced which pass through a catalyst bed at startup, i.e., when a new or freshly regenerated, reactivated platinum-rhenium catalyst is initially contacted with hydrocarbons at reforming temperatures. The temperature excursions or heat fronts are undesirable because the excessive heat often damages the catalyst, or causes excessive coke laydown on the catalyst with consequent catalyst deactivation and, if uncontrolled, may even lead to damage to the reactor and reactor internals. The phenomenon is troublesome in any type of reforming operation, but is particularly troublesome in cyclic reforming wherein one reactor of the series is a swing reactor which is used as a substitute for each of the other reactors so that the catalyst of each in turn can be regenerated, and reactivated. Because of the frequency with which the catalysts must be regenerated in cyclic reforming, as contrasted with other types of reforming units, hydrogenolysis greatly reduces the efficiency of the cyclic reforming process and simply cannot be tolerated.

Hydrogenolysis can be moderated by sulfiding, and consequently it is conventional to presulfide such catalysts prior to their use in reforming. Presulfiding is described and claimed in GB—A— 2004764. Typically, the catalyst is charged into a reactor and then contacted with an admixture of hydrogen sulfide and an inert gas, e.g., nitrogen. Unfortunately, however, whereas sulfiding moderates the type of cracking which causes methane formation it does little to reduce the formation of other gaseous $C_2$+hydrocarbons, e.g., ethane, propane, butane and the like. This type of cracking too can cause the catalysts to become rapidly overheated when exposed, in the presence of hydrogen, at normal reaction conditions to hydrocarbons, to such extent that the catalyst itself can be overheated, sintered or otherwise damaged. Moreover, in sulfiding the catalyst special care must be taken to avoid oversulfiding because platinum-rhenium catalysts pose an acute sensitivity to feed sulfur which can drastically reduce the activity and selectivity of the catalyst; and, an excessive amount of deposited catalyst sulfur can find its way into the feed.

It is also known, e.g. from US—A—3901827 that hydrogenolysis occurring during hydrocarbon reforming in the presence of Group VIII noble and non-noble metal catalysts such as iridium, rhodium, ruthenium, etc can be reduced by including a Group IB metal such a gold, silver or copper in the reforming catalyst. The combinations of Group VIII and Group IB metals tend to be immiscible, and to ensure a good dispersion of the metals, it is necessary to add a third metal which is miscible with the original two metals. Moreover, wide ranges of the proportions of the three metals are proposed including proportions which are disadvantageous in relation to efficient hydrocarbon reforming to desired products.

It is accordingly a primary objective of the present invention to obviate these and other prior art deficiencies, particularly by providing a new and improved catalyst, as well as a process for utilizing such catalyst for upgrading naphthas by reforming to produce higher octane gasolines and a new and improved process for the preparation of such catalysts.

These and other objects are achieved in accordance with the present invention embodying: (1) a hydrocarbon reforming catalyst comprising an inorganic oxide support and catalyst metals composited with said support, wherein the catalyst metals consist only of platinum in an amount of from 0.1 to 2.0 wt%, rhenium in an amount of from 0.1 to 2.0 wt% and copper in an amount of from 0.01 to 0.1 wt%, the weight percentages being based on the dry weight of the catalyst. The concentration of copper is within the range 0.01 to 0.1 wt% and is selected to improve the yield and stability of the catalyst in reforming, as contrasted with a platinum-rhenium catalyst otherwise similar except that the catalyst does not contain any copper. In preferred forms, the catalyst may also contain halogen and/or a sulfur component, (2) a process utilizing such catalyst for upgrading naphthas by reforming to produce higher octane gasolines and (3) a process for the preparation of copper containing catalysts by preforming an inorganic oxide support, or carrier, preferably an alumina support, impregnating said support with a copper-containing halogen acid solution, neutralizing said halogen acid treated copper-containing support, and then impregnating said neutralized support with the desired hydrogenation-dehydrogenation components, e.g., platinum and/or rhenium.

Surprisingly, it has been found that the sequence and the manner in which the metals are added to the support in the formation of such catalysts are critical in the preparation of catalysts exhibiting superior properties. It is essential for best results that the copper be added initially to the preformed support by impregnation with a copper-containing halogen acid solution, preferably a hydrochloric acid solution. Thereafter the copper impregnated support is neutralized with a weakly basic solution, preferably with an ammonium hydroxide solution. Suitably, the neutralized copper-containing support is then impregnated with the desired hydrogenation-dehydrogenation components, either by simultanous addition to a single solution or by sequential impregnation from several solutions to which different metals have been added. The catalyst so produced is far superior, and consistently superior, to simultaneous impregnation of the support with the sum-total of the metals, inclusive of copper; or impregnation of the copper from an aqueous solution, with subsequent impregnation of the other metals. In accordance with the preferred impregnation procedure the copper is uniformly distributed throughout the catalyst.

The catalyst is one which contains platinium as an essential component, generally in concentration ranging from about 0.1 percent to about 2 percent, preferably from about 0.2 percent to about 0.6 percent, based on the weight of the catalyst (dry basis). The catalyst also contains rhenium as an essential component, generally in concentration ranging from about 0.1 percent to about 2 percent, preferably from about 0.2 percent to about 0.6 percent, based on the weight of the catalyst (dry basis). Preferably, the platinum and rhenium are employed in weight ratios of platinum:rhenium ranging from about 0.25:1 to about 3:1, more preferably from about 0.75:1 to about 1.25:1; and most preferably is employed in substantially equal weight ratios when the total contents of these metals ranges from about 0.4 percent to about 1 percent, based on the total weight of the catalyst (dry basis).

Halogen is a highly preferred component, the halogen content of the catalyst generally ranging from about 0.1 to about 2.5 percent, preferably from about 0.7 to about 1.2 percent, based on the weight of the catalyst (dry basis).

Sulfur is a highly preferred component, the sulfur content of the catalyst generally ranging to about 0.2 percent, preferably from about 0.05 percent to about 0.1 percent, based on the weight of the catalyst (dry basis). The sulfur can be added to the catalyst by conventional methods, suitably by breakthrough sulfiding of a bed of the catalyst with a sulfur-containing gaseous stream, e.g., hydrogen sulfide in hydrogen, performed at from about 176.7°C (350°F) to about 565.6°C (1050°F) at about 1—40 atmospheres for the time necessary to achieve breakthrough, or the desired sulfur level.

Copper is an essential component, and the present invention is based on the discovery that excessive hydrogenolysis can be eliminated by the use of small and critical concentrations of copper; and that added benefits can be obtained by the further addition of sulfur to the catalyst to suppress other types of hydrocracking which produces gaseous hydrocarbons. The copper component is conveniently added to the catalyst by impregnation. Suitably, a sufficient amount of a copper-containing compound is added to incorporate from about 0.01 to about 0.1 percent copper, preferably from about 0.025 to about 0.08 percent copper, based on the weight of the catalyst (dry basis). Preferably also, the copper is composited with the catalyst in an amount sufficient to provide a molar ratio of copper:(platinum plus rhenium) ranging from about 0.02:1 to about 0.25:1, preferably from about 0.04:1 to about 0.20:1. The exact concentration of the copper depends to some extent on the nature of the feedstock and reforming conditions, but it is important that the concentration of copper on the catalyst be controlled to the proper level. High concentration of copper acts as a poison and depresses catalyst activity.

While the catalyst may be used directly, it is preferred that it be sulfided to achieve the ultimate suppression of hydrocracking during reforming. Sulfur eliminates principally the formation of excessive methane, and copper eliminates principally the formation of the $C_2^+$ hydrocarbon gases. Together, however, a given amount of both copper and sulfur prove superior in the suppression of total hydrocracking than a corresponding amount of either copper or sulfur employed individually.

The several components of the catalyst are composited with a refractory inorganic oxide support material, particularly alumina. First, the copper is added to the support, by impregnation from a halogen acid solution. The copper is deposited on a previously pilled, pelleted, beaded, extruded, sieved or powdered particulate support material by impregnation with a halogen acid solution within which a compound of copper is dissolved. Generally, the porous refractory inorganic oxide, in dry or solvated state, is contacted, with the copper-containing solution and thereby impregnated by absorption from a dilute or concentrated solution with subsequent filtration or evaporation to effect total uptake of the copper component. The copper is contained in the solution in any of the common inorganic or organic salts of this element. These include halides, nitrates, nitrites, sulfates, sulfites, carbonates, hydroxides, bicarbonates or carboxylates. Preferred salts are fluoride, chloride, nitrate, nitrite, hydroxide and oxide. The more preferred salts are copper (II) fluoride, copper (I) chloride, copper (II) chloride, and copper (II) nitrate due to their availability, low cost, and ready solubility in aqueous media.

While these copper salts may be impregnated onto alumina from aqueous solutions, optimum copper distribution requires the use of hydrochloric acid solutions as the impregnation medium. It is believed that the presence of hydrochloric acid permits the formation of copper chloride complexes that converts cationic copper to an anionic state, which is more readily absorbed and distributed by the alumina. The well known chloro complexes, $CuCl_2^-$, $CuCl_3^=$, $CuCl_3^-$, $CuCl_4^=$, are examples of the copper species best known for effective copper distribution. The concentration of copper in the impregnating solution is not critical and is determined by the copper content desired in the finished catalyst.

The calcined alumina extrudates are soaked in a copper salt solution in hydrochloric acid for a desired period. The strength of the hydrochloric acid may range from about 0.1—11.7 $N$; 1—5 $N$ being preferred; and, 1 $N$ being most preferred. The soaking period may range from 1—24 hr.; 10—20 hr. being preferred. Generally, ambient conditions are employed.

Exposing the alumina to hydrochloric acid introduced high levels of chloride into the alumina base. This high chloride content inhibits subsequent metals impregnation, and the finished catalyst gives high acid cracking in naphtha reforming. Chloride is effectively removed from the acid treated alumina by neutralization, preferably with ammonium hydroxide by soaking at ambient conditions for the desired time. The strength of the ammonium hydroxide solution ranges from 0.1—15 $N$; a range of 0.1—5 $N$ is preferred; 0.5—1.0 $N$ is most preferred. The soaking period ranges from 5—60 min.; 60 min. is preferred. Other inorganic bases are not preferred due to contamination of the alumina by the accompanying metal ions, which depress the activity of the finished catalyst. Aqueous solutions of organic amines and quaternary ammonium bases are not desired due to the prospect for nitrogen poisoning of the alumina and removal of copper through amine complexes. Ammonium hydroxide is most preferred on the basis of cost, effectiveness, and ease of removal by washing with water or thermal treatment.

Impregnation of the remaining metal is accomplished by conventional means. Both the incipient wetness technique and soaking in an excess of the impregnation medium are acceptable. The impregnation of the platinum and rhenium components into a carrier is carried out by impregnating the carrier with a solution, or solutions, of the respective salts or compounds of the elements or metals to be incorporated. Salts, acids or compounds of each metal can be dissolved in a solution, or the salts, acids or compounds can be separately dissolved in solutions, the solutions admixed, and the admixed solution used for impregnation of the carrier. In other words, copper is added initially using conventional techniques, and then the other metals are added simultaneously or sequentially, suitably by impregnation. The amount of impregnation solution used should be sufficient to completely immerse the carrier, usually within the range from about 1 to 20 times of the carrier by volume, depending on the metal concentration in the impregnation solution. The impregnation treatment can be carried out under a wide range of conditions including ambient or elevated temperatures and atmospheric or supra-atmospheric pressures.

In a preferred embodiment of the present invention a carrier, or support, is impregnated with an aqueous halogen-acid solution of the copper, preferably a hydrochloric acid solution containing the copper. Exposure to a halogen acid can introduce substantially high levels of halogen into the carrier which is not desirable because subsequent metal impregnation is inhibited, and the catalyst can produce high acid cracking in reforming. However, excess halogen can be readily removed from the acid treated carrier by neutralization, preferably with ammonium hydroxide, suitably by contact at ambient temperature for periods ranging about 0.1 to about 1 hour, at strengths ranging from about 0.1 $N$ to about 15 $N$, preferably from about 0.1 $N$ to about 5 $N$. These treatments are followed by evaporation or filtration and then drying or calcination, or both, and then the copper impregnated catalyst can be further impregnated with a solution containing a dissolved salt or compound of platinum and rhenium, or platinum, rhenium and additional metals, followed by evaporation or filtration, with subsequent drying or calcination, or both, whereby the components are dispersed substantially uniformly to the inner part of the catalyst.

4

As suggested, a halogen component is also required. Fluorine and chlorine are preferred halogen components. The halogen is contained on the catalyst in concentration ranging from about 0.1 percent up to about 2.5 percent, preferably within the range of about 0.7 to about 1 percent, based on the weight of the catalyst. The introduction of halogen into catalyst can be carried out by any method and at any time of the catalyst preparation, for example, prior to, following or simultaneously with the impregnation of the copper, platinum and rhenium components. In the usual operation, the halogen component is introduced simultaneously with the incorporation of these metal components. It can also be introduced by contacting a carrier material in a vapor phase or liquid phase with a halogen compound such as hydrogen fluoride, hydrogen chloride, ammonium chloride, or the like.

The support can contain, for example, one or more of alumina, bentonite, clay, diatomaceous earth, zeolite, silica, activated carbon, magnesia, zirconia, thoria, and the like, though the most preferred support is alumina to which, if desired, can be added a suitable amount of other refractory carrier materials such as silica, zirconia, magnesia, titania, etc., usually in a range of about 1 to 20 percent, based on the weight of the support. A preferred support for the practice of the present invention is one having a surface area of more than 50 m$^2$/g., preferably from about 100 to about 300 m$^2$/g., a bulk density of about 0.3 to 1.0 g/ml, preferably about 0.4 to 0.8 g/ml, an average pore volume of about 0.2 to 1.1 ml/g., preferably about 0.3 to 0.8 ml/g., and an average pore diameter of about 30 to 300 Å.

The catalyst, after impregnation, is dried by heating at a temperature above about 26,7°C (80°F), preferably between about 65,6°C (150°F) and 148,9°C (300°F), in the presence of nitrogen or oxygen, or both, in an air stream or under vacuum. The catalyst is calcined at a temperature between about 260°C (500°F) to 649°C (1200°F), preferably about 260°C (500°F) to 538°C (1000°F), either in the presence of oxygen in an air stream or in the presence of an inert gas such as N$_2$.

The catalyst can be activated by contact with air at temperatures ranging from about 260°C (500°F) to about 566°C (1050°F) for periods ranging from about 1 to about 24 hours in either flowing or static air. Reduction is performed by contact with flowing hydrogen at temperatures ranging from about 350°F to about 1050°F for periods ranging from about 0.5 to about 24 hours at about 1—40 atm. The catalyst can be sulfided by use of a blend of H$_2$S/H$_2$ and performed at temperatures ranging from about 176,7°C (350°F) to about 565,6°C (1050°F) at about 1—40 atm. for a time necessary to achieve breakthrough, or the desired sulfur level. Post-sulfiding stripping can be employed if desired at conditions similar to those for reduction of the catalyst.

Treatment of the catalyst with mixture of chlorine and oxygen can be substituted for air activation if desired. This procedure can correct for any possible maldispersion of the metals arising from improper impregnation, and the procedure is useful in restoring activity during regeneration-rejuvenation after an oil service. A blend of chlorine, oxygen and nitrogen can also be employed at temperatures ranging from about 176,7°C (350°F) to about 565,6°C (1050°F) for periods ranging from about 1 to about 24 hours at 1—40 atm. Treat times for these various operations is a function of gas flow rates, gas compositions, and conditions. The catalyst halide content can be controlled during impregnation, or adjusted by treatment with water or water-hydrogen chloride blends.

This catalyst can be used in semi-regenerative, cyclic, semi-cyclic, or continuous bed reforming. The catalyst is particularly useful at severe reforming conditions, especially at low pressures, or gauge pressures ranging from about 3,5155 Kg/cm$^2$ (50 psig) to about 10,574 Kg/cm$^2$ (150 psig), where maximum yield is favored.

The feed or charge stock can be a virgin naphtha, cracked naphtha, a Fischer-Tropsch naphtha, or the like. Typical feeds are those hydrocarbons containing from about 5 to 12 carbon atoms, or more preferably from about 6 to about 9 carbon atoms. Naphthas, or petroleum fractions boiling within the range of from about 26.7°C (80°F) to about 232.2°C (450°F), and preferably from about 51.7°C (125°F) to about 190.6°C (375°F), contain hydrocarbons of carbon numbers within these ranges. Typical fractions thus usually contain from about 20 to 80 Vol. % paraffins, both normal and branched, which fall in the range of about C$_5$ to C$_{12}$, from about 10 to 80 Vol. % of naphthenes falling within the range of from about C$_6$ to C$_{12}$, and from 5 through 20 Vol. % of the desirable aromatics falling within the range of from about C$_6$ to C$_{12}$.

The reforming runs are initiated by adjusting the hydrogen and feed rates, and the temperature and pressure to operating conditions. The run is continued at optimum reforming conditions by adjustment of the major process variables, within the ranges described below:

| Major operating variables | Typical process conditions | Preferred process conditions |
|---|---|---|
| Gauge pressure, (psig) kg/cm² | (50—750) 3.5155—52.733 | (100—300) 7.031—21.093 |
| Reactor temp., (°F) °C | (750—1100) 399—593 | (850—1000) 454—538 |
| Gas rate, (incl. recycle gas) (SCF/B) l gas/l feed | (1500—10,000) 267.2—1781.1 | (2000—7000) 356.2—1246.8 |
| Feed rate, W/H/W | 0.5—10 | 1—3 |

(W/H/W=weight of feed per hour per unit weight of catalyst)

The invention will be more fully understood by reference to the following demonstrations and examples which present comparative data illustrating its more salient features. All parts are given in terms of weight except as otherwise specified.

Example I

A commercial platinum-rhenium catalyst (Catalyst A) of the following weight percent composition was dried and activated by contact with air at 537.8°C (1000°F) for 3-1/2 hours. A sample was charged to a quartz reactor and reduced in flowing $H_2$ at 500°C (932°F) for 1 hour at 600 cm³/min. The catalyst was breakthrough sulfided using 0.2 Vol. % $H_2S$ in $H_2$ at 500°C (932°F) and 600 cm³/min. The catalyst was then treated with $H_2$ at 500°C (932°F) for 2 hours at 600 cm³/min. The composition of the catalyst is given in Table I.

Catalyst B was prepared from 1,585 mm (1/16″) high purity gamma alumina extrudates by calcining same in air at 537.8°C (1000°F) for 4 hours. The extrudates were impregnated overnight with a stock solution of cuprous chloride in 1 $M$ hydrochloric acid. The extrudates were washed with water and soaked in ammonium hydroxide solution for 1 hour to remove excess chloride. After washing with water the extrudates were impregnated with an aqueous solution of chloroplatinic acid, perrhenic acid, and hydrochloric acid using $CO_2$ as an impregnation aid. The catalyst was air dried and then dried in vacuum at 54.4°C (130°F) overnight. The catalyst was air activated and reduced. The composition of the unsulfided catalyst is given in Table I.

In the preparation of Catalyst C, a portion of Catalyst B was air activated, reduced, sulfided, and stripped as described for Catalyst A. The composition of Catalyst C is as given in Table I.

TABLE I

| Components | Catalyst A | Catalyst B | Catalyst C |
|---|---|---|---|
| Platinum | 0.3% | 0.32% | 0.32% |
| Rhenium | 0.3% | 0.23% | 0.23% |
| Chlorine | 0.93% | 0.93% | 0.90% |
| Copper | —— | 0.05% | 0.05% |
| Sulfur | 0.084% | —— | 0.08% |
| Alumina | 97.5% | 98.5% | 98.4% |

The catalysts were each then contacted at reforming conditions in separate runs with heptane with the results given in Table II.

TABLE II

Heptane reforming

500°C (932°F), 7.031 kg/cm² gauge (100 psig), 10 W/H/W, $H_2$/heptane=5

| Catalyst | Yield, Wt.% | | |
|---|---|---|---|
| | $C_1$ | $C_2$—$C_4$ | $C_5+$ |
| A(Pt-Re-S) | 1.5 | 21.4 | 77.1 |
| B(Pt-Re-Cu) | 1.6 | 15.3 | 83.1 |
| C(Pt-Re-Cu-S) | 1.0 | 15.9 | 83.1 |

These data show that traditional sulfiding controls methane formation but has little impact on other hydrocracking products. The simple substitution of copper for sulfur provides control of all hydrogenolysis processes and affords higher liquid yields. The use of copper and sulfur together is superior to sulfiding alone, but the yield and stability credits arising from copper-sulfur synergism are not apparent with this simple feed.

In further tests, Catalysts A and C were used to reform a petroleum naphtha. Catalyst C, which contains both copper and sulfur, as will be shown, provides both yield and activity credits relative to Catalyst A, the basic Pt-Re catalyst.

In conducting the run with Catalysts A and C, a low sulfur paraffinic naphtha having the inspections given in Table III was employed.

TABLE III

| ASTM distillation,% | °F | °C |
|---|---|---|
| Initial | 145 | 62.8 |
| 10 | 181 | 82.8 |
| 20 | 204 | 95.6 |
| 30 | 222 | 105.6 |
| 40 | 240 | 115.6 |
| 50 | 258 | 125.6 |
| 60 | 275 | 135.0 |
| 70 | 293 | 145.0 |
| 80 | 313 | 156.1 |
| 90 | 334 | 167.8 |
| Final B.P. | 363 | 183.9 |
| Octane no., RON clear | 34.8 | |
| Specific gravity, (°API) | (59.7) | 0.7401 |
| Sulfur, Wt. ppm | <0.1 | |
| Water, Wt. ppm | 7 | |
| Chlorine, Wt. ppm | <0.1 | |
| | | |
| Analysis, vol. percent | | |
| Paraffins | 69.51 | |
| Naphthenes | 18.48 | |
| Aromatics | 12.01 | |

The reforming run was carried out at conditions required to produce a 100 RON liquid product, i.e., at 498.9°C (930°F), 14.062 kg/cm$^2$ gauge (200 psig), 890.6 l gas/l feed (500 SCF/B) and 1.4 W/H/W. The results are given in Table IV.

TABLE IV

Reforming of low sulfur paraffinic feed
498.9°C (930°F), 14.062 kg/cm$^2$ gauge (200 psig) 890.6 l gas/l feed (5000 SCF/B), 1.4 W/H/W

| Catalyst | Relative activity (400 hr.) | C$_5^+$ LV% at 100 RON (400 hr.) |
|---|---|---|
| A(Pt-Re-S) | 1.0 | 71.8 |
| C(Pt-Re-Cu-S) | 1.2 | 74.3 |

(LV%=percentage by volume of liquid)

Catalyst C was again used to reform said petroleum naphtha at more severe conditions. The catalyst again provided excellent yield and activity stability at the severe conditions as given in Table V.

7

## TABLE V

Cyclic reforming of low sulfur paraffinic feed
510°C (950°F), 12.304 kg/cm² gauge (175 psig), 534.3 l gas/l feed (3000 SCF/B), 2.5 W/H/W

| Hr. on oil | Relative activity | $C_5^+$ LV% at 100 RON |
|---|---|---|
| 24 | 1.9 | 74.7 |
| 72 | 1.7 | 75.3 |
| 145 | 1.4 | 74.9 |
| 240 | 1.0 | 73.7 |

These data show that yield and activity stability are improved over cycle lengths six times that of conventional catalysts. Yield stability was maintained for a period ten times that normally employed.

Catalyst C was again used to reform the low sulfur paraffinic feed at 500°C (932°F), 7.031 kg/cm² gauge (100 psig), 890.6 l gas/l feed (5000 SCF/B), 1.4 W/H/W, as given in Table VI. This data clearly illustrates the improved activity and yield stability of the catalyst under even the severe conditions of low pressure reforming.

## TABLE VI

Low pressure reforming of low sulfur paraffinic feed
500°C (832°F), 7.031 kg/cm² gauge (100 psig), 890.6 l gas/l feed (5000 SCF/B), 1.4 W/H/W

| Catalyst | Relative activity (400 hr.) | $C_5^+$ LV% at 100 RON (400 hr.) |
|---|---|---|
| A(Pt-Re-S) | 1.0 | 75.8 |
| C(Pt-Rt-Cu-S) | 1.3 | 78.3 |

Example II

A series of catalysts were prepared from commercially supplied 1.585 mm (1/16″) high purity gamma alumina extrudates calcined in air at 537.8°C (1000°F) for 4 hours.

Catalyst D

To a solution of 4.0 ml of copper (I) chloride stock solution (50 mg Cu/ml) and 37.5 ml of concentrated hydrochloric acid diluted with water to 450 ml was added 291 g. of alumina extrudates. After 16 hrs. the extrudates were recovered by filtration and washed with two liters of water. The extrudates were added to 500 ml of ammonium hydroxide solution containing 33 ml of concentrated NH$_4$OH. After one hour the extrudates were collected by filtration and washed with eight liters of water. The extrudates were added to 450 ml of water. The following stock solutions were added: 36 ml H$_2$PtCl$_6$ (25 mg Pt/ml); 54.2 ml HReO$_4$ (16.6 mg Re/ml); 3.3 ml HCl (60 mg Cl/ml). The catalyst was recovered by filtration, dried in air, and finally dried in a vacuum oven at 130°C for 3 hours. The catalyst was crushed to 14—35 mesh particles, and a sample was charged to a quartz pretreat reactor. The catalyst was treated with the following gases at 500°C and 600 cm³/min; H$_2$, 1 hr.; 0.2% H$_2$S in H$_2$, 7 min.; H$_2$, 2 hrs. The composition of the catalyst is given in Table VII.

Catalyst E

To a solution of 15 ml of copper (I) chloride stock (50 mg Cu/ml) and 48 ml of concentrated hydrochloric acid diluted to 450 ml with water was added 300 g. of alumina extrudates. After 16 hours the alumina was recovered, washed with water, and dried. One hundred grams of the copper-alumina was added to 150 ml of water. Stock solutions of H$_2$PtCl$_6$ and HReO$_4$ were added. The catalyst was recovered and dried in a vacuum oven. A sample was pretreated in a quartz reactor as described for Catalyst D. Catalyst E was air activated in a muffle furnace at 398,9°C (750°F) for 3 hours prior to being charged to the quartz reactor. The composition of the catalyst is given in Table VII.

Catalysts D and E were examined for metals distribution by electron probe microscopy. In all cases uniform copper distribution results when the procedure of this invention was used to prepare the catalyst.

## TABLE VII

| Components | Catalyst D | Catalyst E |
|---|---|---|
| Platinum | 0.32 | 0.22 |
| Rhenium | 0.23 | 0.19 |
| Copper | 0.053 | 0.10 |
| Chlorine | 0.90 | 1.35 |
| Sulfur | 0.077 | 0.053 |

Catalysts D and E were each then contacted at reforming conditions in separate runs with heptane with the results given in Table VIII.

## TABLE VIII

Heptane reforming
500°C, 7.031 kg/cm$^2$ gauge (100 psig), H$_2$/heptane=5

| Catalyst | W/H/W | Yield, Wt. % | |
|---|---|---|---|
| | | C$_5^+$ | Toluene |
| D(Pt-Re-Cu) | 10 | 81.7 | 24.0 |
| E(Pt-Re-Cu) | 10 | 64.0 | 24.0 |

Catalyst D prepared by the preferred procedure of this invention is clearly the superior catalyst.

It is apparent that various modifications and changes can be made without departing from the spirit and scope of the present invention.

Conversion of units

Temperatures given in °F are converted to °C by subtracting 32 and then dividing by 1.8.

Pressures given in pounds per square in. gauge (psig) are converted to the equivalent in kg/cm$^2$ by multiplying by 0.07031.

Volumes of gas given in standardized cubic feet (SCF) are converted to litres by multiplying by 28.32.

Volumes of liquid given in barrels (B) are converted to litres by multiplying by 159.0.

Linear measurements in inches (″) are converted to mms. by multiplying by 25.4.

The mesh size referred to in relation to Catalyst D of Example II is of the Tyler series.

In the Heptane Reforming operations summarized in Tables II and VIII, the H$_2$/Heptane ratio is the mole ratio.

## Claims

1. A hydrocarbon reforming catalyst comprising an inorganic oxide support and catalyst metals composited with said support, characterized in that said metals consist only of platinum in an amount in the range of from 0.1 to 2.0 wt.%, rhenium in an amount in the range of from 0.1 to 2.0 wt.% and copper in an amount in the range of from 0.01 to 0.1 wt.%, said weight percentages being based on the weight of the catalyst (dry basis).

2. The composition of claim 1 characterized in that the catalyst contains from 0.025 to 0.08 wt. percent copper.

3. The composition of claim 2 characterized in that the copper composited with the catalyst is in an amount sufficient to provide a molar ratio of copper: (platinum plus rhenium) of from 0.02:1 to 0.25:1.

4. The composition of any one of claims 1 to 3 characterized by containing from 0.1 to 2.5 percent halogen, preferably chlorine.

5. The composition of any one of claims 1 to 4 characterized in that the catalyst is sulfided, and contains up to about 0.2 percent sulfur.

6. The composition of any one of claims 1 to 5 characterized by comprising platinum and rhenium in a weight ratio of platinum:rhenium of from 0.25:1 to 3:1.

7. The composition of any one of claims 1 to 6 characterized in that said inorganic oxide is or comprises alumina.

8. A process for the preparation of the catalyst of any one of claims 1 to 7 characterized in that the process comprises:

(a)  forming an inorganic oxide support
(b)  impregnating said support by contact thereof with a copper-containing halogen acid solution,
(c)  neutralizing said halogen acid treated, copper-containing support, and then
(d)  impregnating said copper-containing support by contact thereof with at least one solution containing a compound of a metal selected from platinum, rhenium and mixtures thereof.

9. The process of claim 8 characterized in that the inorganic oxide support is or comprises alumina, the halogen acid is hydrogen chloride, and the halogen acid treated copper-containing support is neutralized with ammonium hydroxide.

10. A process for reforming a hydrocarbon feed characterized by comprising the step of contacting said feed at reforming conditions with a catalyst composition according to any one of claims 1 to 7.

**Patentansprüche**

1. Kohlenwasserstoffreformierkatalysator, der einen anorganischen Oxidträger und damit gemischte katalytische Metalle enthält, dadurch gekennzeichnet, daß die Metalle nur aus Platin in einer Menge im Bereich von 0,1 bis 2 Gew.%, Rhenium in einer Menge im Bereich von 0,1 bis 2.0 Gew.% und Kupfer in einer Menge im Bereich von 0,01 bis 0,1 Gew.% bestehen, wobei die jeweiligen Gewichtsprozent-Angaben auf das Gewicht des Katalysators (Trockenbasis) bezogen sind.

2. Zusammensetzung nach Anspruch 1, dadurch gekennzeichnet, daß der Katalysator 0,025 bis 0,08 Gew.% Kupfer enthält.

3. Zusammensetzung nach Anspruch 2, dadurch gekennzeichnet, daß das mit dem Katalysator vermischte Kupfer in ausreichender Menge vorliegt, um ein molares Verhältnis von Kupfer:(Platin+Rhenium) von 0,02:1 bis 0,25:1 zu liefern.

4. Zusammensetzung nach jedem der Ansprüche 1 bis 3, dadurch gekennzeichnet, daß sie 0,1 bis 2,5% Halogen, vorzugsweise Chlor enthält.

5. Zusammensetzung nach jedem der Ansprüche 1 bis 4, dadurch gekennzeichnet, daß der Katalysator sulfidiert ist und bis zu etwa 0,2% Schwefel enthält.

6. Zusammensetzung nach jedem der Ansprüche 1 bis 5, dadurch gekennzeichnet, daß sie Platin und Rhenium in einem Gewichtsverhältnis von Platin zu Rhenium von 0,25:1 bis 3:1 enthält.

7. Zusammensetzung nach jedem der Ansprüche 1 bis 6, dadurch gekennzeichnet, daß das anorganische Oxid Aluminiumoxid ist oder enthält.

8. Verfahren zur Herstellung des Katalysators gemäß jedem der Ansprüche 1 bis 7, dadurch gekennzeichnet, daß man.

a)  einen anorganischen Oxidträger herstellt,
b)  den Träger imprägniert, indem man ihn mit einer kupferhaltigen Halogensäurelösung kontaktiert,
c)  den mit Halogensäure behandelten, Kupfer enthaltenden Träger neutralisiert und dann
d)  den Kupfer enthaltenden Träger imprägniert, indem man ihn mit mindestens einer Lösung kontaktiert, die eine Verbindung eines Metalls ausgewählt aus Platin, Rhenium und Mischungen derselben enthält.

9. Verfahren nach Anspruch 8, dadurch gekennzeichnet, daß der anorganische Oxidträger Aluminiumoxid ist oder enthält, die Halogensäure Salzsäure ist, und der Halogensäure behandelte, Kupfer enthaltende Träger mit Ammoniumhydroxid neutralisiert wird.

10. Verfahren zum Reformieren eines Kohlenwasserstoffeinsatzproduktes, dadurch gekennzeichnet, daß in einer Verfahrensstufe das Einsatzprodukt unter Reformierbedingungen mit einer Katalysatorzusammensetzung gemäß irgendeinem der Ansprüche 1 bis 7 kontaktiert wird.

**Revendications**

1. Catalyseur de reformage d'hydrocarbures, comprenant un support d'oxyde inorganique et des métaux catalyseurs formant un composite avec le support, caractérisé en ce que les métaux ne comprennent que du platine, en une quantité comprise entre 0,1 et 2,0% en poids, du rhénium en une quantité comprise entre 0,1 et 2,0% en poids et du cuivre en une quantité comprise entre 0,01 et 0,1% en poids, les pourcentages en poids étant basés sur le poids du catalyseur (base sèche).

2. Composition selon la revendication 1, caractérisée en ce que le catalyseur contient de 0,025 à 0,08% en poids de cuivre.

3. Composition selon la revendication 2, caractérisée en ce que le cuivre formant un composite avec le catalyseur se trouve en une quantité suffisante pour donner un rapport molaire cuivre: (platine plus rhénium) compris entre 0,02:1 et 0,25:1.

4. Composition selon l'une quelconque des revendications 1 à 3, caractérisée en ce qu'elle contient de 0,1 à 2,5% en poids d'un halogène, de préférence le chlore.

**0 018 201**

5. Composition selon l'une quelconque des revendications 1 à 4, caractérisée en ce que le catalyseur est sulfuré et contient jusqu'à environ 0,2% de soufre.

6. Composition selon l'une quelconque des revendications 1 à 5, caractérisée en ce qu'elle comprend du platine et du rhènium dans un rapport pondéral platine:rhénium compris entre 0,25:1 et 3:1.

7. Composition selon l'une quelconque des revendications 1 à 6, caractérisée en ce que l'oxyde inorganique est l'alumine ou en comprend.

8. Procédé de préparation du catalyseur selon l'une quelconque des revendications 1 à 7, caractérisé en ce qu'il consiste:

(a) à former un support d'oxyde inorganique,
(b) à imprégner le support, par contact avec une solution d'un halogéno acide contenant du cuivre,
(c) à neutraliser le support contenant le cuivre et traité à l'halogèno acide et
(d) à imprénger le support contenant le cuivre par contact avec au moins une solution contenant un composé d'un métal choisi parmi le platine, le rhénium et leurs mélanges.

9. Procédé selon la revendication 8, caractérisé en ce que le support d'oxyde inorganique est l'alumine ou en comprend, l'halogéno acide est le chlorure d'hydrogène, et le support contenant du cuivre et traité à l'halogéno acide est neutralisé par de l'hydroxyde d'ammonium.

10. Procédé de reformage d'une charge hydrocarbonée, caractérisé en ce qu'il comprend l'étape consistant à mettre en contact le charge, dans les conditions de reformage, avec une composition de catalyseur selon l'une quelconque des revendications 1 à 7.